(19) Europäisches Patentamt
European Patent Office
Office européen des brevets

(11) **EP 3 214 412 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
***G01D 5/251*** *(2006.01)*

(21) Anmeldenummer: **17000322.2**

(22) Anmeldetag: **02.03.2017**

(54) **POSITIONSBESTIMMUNGSEINHEIT**

POSITIONING UNIT

UNITÉ DE DÉTERMINATION DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2016 DE 102016002488**

(43) Veröffentlichungstag der Anmeldung:
**06.09.2017 Patentblatt 2017/36**

(73) Patentinhaber: **TDK-Micronas GmbH**
**79108 Freiburg (DE)**

(72) Erfinder:
• **Franke, Jörg**
**79117 Freiburg (DE)**
• **Heberle, Klaus**
**79312 Emmendingen (DE)**

(74) Vertreter: **Koch Müller**
**Patentanwaltsgesellschaft mbH**
**Maaßstraße 32/1**
**69123 Heidelberg (DE)**

(56) Entgegenhaltungen:
WO-A1-2015/192965    DE-B4-112009 004 394
DE-U1- 20 009 155    US-A1- 2012 136 541

EP 3 214 412 B1

**Beschreibung**

Die Erfindung betrifft eine Positionsbestimmungseinheit.

Aus der WO 2015/192965 A1 ist eine Sensoreinheit zur Bestimmung einer linearen Position entlang einer Strecke bekannt. Die Sensoreinheit weist eine Vielzahl von in einer Reihe entlang der Strecke angeordneten Hallschaltern, einen über der Reihe von Hallschaltern beweglichen Geber, eine Vielzahl von in Reihe geschalteten Widerständen und eine Spannungsmesseinheit auf, wobei jeweils ein Hallschalter einen zwischen jeweils zwei Widerständen liegenden Spannungsknoten schaltbar erdet. Mittels des mit der Spannungsmessungsmesseinheit ermittelten Spannungsabfalls wird die Position des Gebers über den aufgereihten Hallschaltern ermittelt.

Aus der DE 11 2009 004 394 B4 ist Master-Slave-System für mehrere Sensoren beschrieben, wobei die Sensoren in einer Daisy-Chain-Anordnung angeordnet sind.

Vor diesem Hintergrund besteht die Aufgabe der Erfindung darin, eine Vorrichtung anzugeben, die den Stand der Technik weiterbildet.

Die Aufgabe wird durch eine Positionsbestimmungseinheit mit den Merkmalen des Patentanspruchs 1 gelöst. Vorteilhafte Ausgestaltungen der Erfindung sind Gegenstand von Unteransprüchen.

Der Gegenstand der Erfindung stellt eine Positionsbestimmungseinheit bereit, wobei die Positionsbestimmungseinheit eine Anzahl von N, in vorbestimmten Abständen an Positionen entlang einer vorzugsweise geraden oder ringförmigen Strecke angeordneten, gleichartigen Sensoreinheiten, einen Geber und eine Strommesseinheit aufweist.

Der Geber ist entlang der Strecke beweglich und weist ein erstes Ende und ein von dem ersten Ende parallel zu der Strecke verlaufende Länge auf. Der Geber umfasst ein ferromagnetisches Material.

Jeder Sensoreinheit weist einen Träger, einen Versorgungsspannungsanschluss, einen zweiten Versorgungsspannungsanschluss, einen Schaltausgang, eine Messeinheit mit einem Schaltausgang und einen Bias-Magneten mit einem ersten Pol und einem zweiten Pol auf.

Die Messeinheit, um ein von dem Messsignal des Magnetfeldsensor abhängiges Sensorsignal bereitzustellen, mindestens einen Magnetfeldsensor aufweist und mit einer Unterseite auf einer Oberseite des Trägers angeordnet ist.

und der Schaltausgang in Abhängigkeit von einer Schwellwertüberschreitung oder einer Schwellwertunterschreitung des Sensorsignals in einen on-Zustand oder einen off-Zustand geschaltet ist. Der erste Versorgungsspannungsanschluss jeder Sensoreinheit ist mit einer Versorgungsspannung verbunden. Eine erste Sensoreinheit ist an einem Anfang der Strecke angeordnet und eine letzter Sensoreinheit an einem Ende der Strecke.

Die erste Sensoreinheit ist mittels des zweiten Versorgungsspannungsanschlusses mit einem Referenzpotential verbunden, z.B. mit einem Massepotential, und weist eine Stromaufnahme Isup auf.

Die zweiten Versorgungsspannungsanschlüsse der weiteren Sensoreinheiten sind jeweils mit dem Schaltausgang der vorausgehenden Sensoreinheit verbunden, wobei die jeweilige weitere Sensoreinheit mittels des Schaltausgangs der vorausgehenden Sensoreinheit einschaltbar oder ausschalbar ist und die jeweilige weitere Sensoreinheit im eingeschalteten Zustand eine Stromaufnahme Isup aufweist.

Eine Strommesseinheit ist vor dem ersten Versorgungsspannungsanschluss der ersten Sensoreinheit oder vor dem zweiten Versorgungsspannungsanschluss der ersten Sensoreinheit angeordnet.

Die Stromaufnahmen Isup aller eingeschalteten Sensoreinheiten tragen zu einem mittels der Strommesseinheit gemessenen Summenstrom Isum bei, wobei der Summenstrom Isum ein Vielfaches der Stromaufnahmen Isup beträgt und zu einer Position des ersten Endes des Gebers proportional ist.

Es sei angemerkt, dass die mit Bias-Magnet ausgestatteten Sensoreinheiten eine Änderung des Bias-Magnetfelds durch einen ferromagnetisches Material aufweisenden Geber detektieren.

Detektiert wird das Sensorsignal mittels des mindestens einen Magnetfeldsensor der Messeinheit. Die Genauigkeit der Messung lässt sich durch den Einsatz von zwei Magnetfeldsensors erhöhen. Auch lassen sich mit zwei Magnetfeldsensoren differentielle Messungen durchführen. Die Messeinheit ist vorzugsweise als integrierte Schaltung an der Oberfläche eines Halbleiterbausteins ausgebildet.

Die kaskadenartige Verschaltung der Sensoreinheiten wird häufig auch als Daisy Chain bezeichnet. Während sich die erste Sensoreinheit bei Inbetriebnahme der Positionsbestimmungseinheit immer in dem eingeschalteten Zustand befindet, werden folgende Sensoreinheiten in der Daisy Chain Anordnung jeweils erst aufgrund einer Schwellwertüberschreitung des Sensorsignals der unmittelbar vorhergehenden Sensoreinheit eingeschaltet. Die Schwellwertüberschreitung eines Sensorsignals der jeweiligen Sensoreinheit wird durch den Geber ausgelöst.

Für die Positionsbestimmung wird ausgenutzt, dass eine eingeschaltete Sensoreinheit im Unterschied zu einer ausgeschalteten Sensoreinheit eine von Null verschiedene Stromaufnahme aufweist. Anhand der Messung der Gesamtstromaufnahme, hier als Summenstrom bezeichnet, lässt sich auf die Anzahl der eingeschalteten Sensoreinheiten und damit auf die Position des für das Einschalten verantwortlichen Gebers geschlossen werden.

Ein Vorteil der erfindungsgemäßen Vorrichtung ist, dass nicht mit den einzelnen Sensoreinheiten kommuniziert werden muss bzw. nicht die Ausgangssignale der Sensoreinheiten ausgewertet werden müssen, sondern der Summenstrom und die festen Positionen der Sensoreinheiten bereits die Information über die Position des Gebers enthalten. Hierdurch erübrigt sich eine aufwändige Schaltung zur Adressvergabe und Adressausgabe.

Mit der erfindungsgemäßen Positionsbestimmungseinheit sind Wegmessungen über lange Bereiche möglich, wie sie beispielsweise für Sitzschienen in Autos oder für die Füllstandsmessung in Kraftstofftanks notwendig sind.

Gemäß einer ersten alternativen Ausführungsform ist der Bias-Magnet jeder Sensoreinheit in einer von dem Anfang der Strecke zu dem Ende der Strecke zeigenden ersten Richtung vor oder hinter der Messeinheit auf der Oberfläche des Trägers angeordnet, wobei der erste Pol und der zweite Pol entlang der ersten Richtung oder senkrecht zu der ersten Richtung nacheinander angeordnet sind.

Durch die vorbeschriebene Anordnung der Bias-Magneten sind Messeinheiten und Bias-Magneten der Sensoreinheiten entlang der Strecke abwechselnd aufgereiht.

Ein Aufeinanderfolgen der Pole entlang der ersten Richtung bewirkt, dass der erste Pol mit einer Stirnseite zu der Messeinheit ausgerichtet ist. Hierdurch wird an der Oberfläche der der Messeinheit ein zu der Oberfläche paralleles und verlaufendes Bias-Magnetfeld erzeugt.

Mit dem Aufeinanderfolgen der Pole in einer senkrecht zu der ersten Richtung ausgerichteten zweiten Richtung, wird an der gesamten Oberfläche der Messeinheit ein parallel zu der zweiten Richtung und zu der Oberfläche verlaufendes Bias-Magnetfeld erzeugt. Durch die Umkehr des Magnetfelds bilden sich oberhalb bzw. an der Oberfläche der Messeinheit zwei Bereiche aus, wobei die Magnetfelder der Bereiche jeweils genau entgegengesetzt verlaufen.

Sind zwei Magnetfeldsensoren vorgesehen, wobei der erste Magnetfeldsensor in dem ersten Bereich und der zweite Magnetfeldsensor in dem zweiten Bereich angeordnet ist, lässt sich eine absolute Messung durchführen. Einflüsse durch äußere Magnetfelder, wie z.B: beliebige Störfelder werden unterdrückt.

Ohne eine Richtungsumkehr des Bias-Magnetfelds ist zumindest eine differentielle Messung des Magnetfelds, also das Erfassen von Änderungen des Magnetfelds möglich.

In einer zweiten alternativen Ausführungsform ist der Bias-Magnet jeder Sensoreinheit in einer von dem Anfang der Strecke zu dem Ende der Strecke zeigenden ersten Richtung neben der Messeinheit auf der Oberfläche des Trägers angeordnet, wobei der erste Pol in der ersten Richtung vor dem zweiten Pol angeordnet ist, wodurch an der gesamten Oberfläche der Messeinheit ein parallel zu der Oberfläche und zu der ersten Richtung verlaufendes Bias-Magnetfeld erzeugt wird.

Gemäß einer dritten alternativen Ausführungsform ist der Bias-Magnet jeder Sensoreinheit U-förmig mit zwei parallel zueinander verlaufende Seitenwänden und einem die zwei Seitenwände verbindenden Boden ausgebildet, wobei die beiden Seitenwände und ein sich an die Seitenwände anschließender Teil des Bodens den ersten Pol bilden und ein von den Seitenwänden abgewandter zweiter Teil des Bodens den zweiten Pol bildet, der Träger und die Messeinheit vollständig zwischen den Seitenwänden angeordnet sind und die Oberfläche des Trägers senkrecht zu den Seitenwänden ausgerichtet ist.

In einer vierten alternativen Ausführungsform ist der Bias-Magnet jeder Sensoreinheit U-förmig mit einer ersten Seitenwand, einer parallel zu der ersten verlaufenden zweiten Seitenwand und einem die erste und die zweite Seitenwand verbindenden Boden ausgebildet ist, wobei die erste Seitenwand und ein sich an die erste Seitenwand anschließender erster Teil des Bodens den ersten Pol bilden und die zweite Seitenwand und ein sich an die zweite Seitenwand anschließender zweiter Teil des Bodens den zweiten Pol bilden, der Träger und die Messeinheit vollständig zwischen der ersten und der zweiten Seitenwand angeordnet sind und die Oberfläche des Trägers senkrecht zu der ersten und der zweiten Seitenwand ausgerichtet ist. Hierdurch bildet sich an der gesamten Oberfläche des Magnetfeldsensors ein parallel zu der Oberfläche und senkrecht zu den Seitenwänden verlaufendes Bias-Magnetfeld aus.

In einer weiteren alternativen Ausführungsform ist der on-Zustand des Schaltausgangs jeder Sensoreinheit bei Überschreiten eines ersten Schwellwerts geschaltet bzw. der off-Zustand des Schaltausgangs jeder Sensoreinheit bei Unterschreiten des ersten Schwellwerts geschaltet. Die Länge des Gebers erstreckt sich von dem ersten Ende des Gebers mindestens bis zu der ersten Sensoreinheit, wobei die Position des ersten Endes des Gebers im Bereich der Position Pm des m-ten Sensoreinheit Sm einem Summenstrom $I_{sum} = (m+1)*I_{sup}$ entspricht.

In der vorbeschriebenen nicht-invertierenden Ausführungsform ist die erste Sensoreinheit immer eingeschaltet, während alle weiteren Sensoreinheiten erst aufgrund einer Schwellwertüberschreitung des Sensorsignals einer unmittelbar vorausgehenden Sensoreinheit eingeschaltet werden. Wird das erste Ende des Gebers bis über die erste Sensoreinheit bewegt, so überschreitet das Sensorsignal den ersten Schwellwert und schaltet die unmittelbar folgende Sensoreinheit ein. Wird das erste Ende des Gebers weiter bis über die zweite Sensoreinheit bewegt, wird die unmittelbar folgende dritte Sensoreinheit eingeschaltet usw.

Um eine Position des ersten Endes des Gebers ermitteln zu können, muss in der nicht-invertierenden Ausführungsform immer gewährleistet sein, dass der Geber eine ausreichende Länge aufweist, so dass sich der Geber bei einer Bewegung entlang der gesamten Strecke immer von dem ersten Ende mindestens bis über die erste Sensoreinheit erstreckt, da ansonsten alle weiteren Sensoreinheiten abschaltet werden - Folge der sogenannten Daisy-Chain Anordnung.

Die Position des ersten Endes des Gebers lässt sich zwischen einer Position 0 vor dem ersten Sensoreinheit (Schaltausgang der ersten Sensoreinheit im off-Zustand, Isum = 1*Isup) und einer Position PN-1 der vorletzten Sensoreinhelt (Schaltausgang der vorletzten Sensoreinheit im on-Zustand, Isum = N*Isup) bestimmen.

Gemäß einer Weiterbildung zur Erhöhung der Genauigkeit der Positionsbestimmung weist jeder Sensoreinheit mindestens einen ersten Schwellwert und einen zweiten Schwellwert auf und die Länge des Gebers von dem ersten Ende erstreckt sich mindestens bis zu dem ersten Sensoreinheit, wobei der zweite Schwellwert kleiner als der erste Schwellwert ist, der on-Zustand des Schaltausgangs jeder Sensoreinheit bei Überschreiten des ersten Schwellwerts geschaltet ist, der off-Zustand des Schaltausgangs jeder Sensoreinheit bei Unterschreiten des zweiten Schwellwerts geschaltet ist und der on-Zustand des Schaltausgangs jeder Sensoreinheit für zwischen dem zweiten Schwellwert und dem ersten Schwellwert liegende Sensorsignale pulsweitenmoduliert geschaltet ist. Ein Tastgrad der Pulsweitenmodulation ist proportional zu dem Sensorsignal, wobei die Stromaufnahme Ipwm einer mit dem pulsweitenmoduliert geschalteten Schaltausgang verbundenen Sensoreinheit proportional zu dem Tastgrad und kleiner als die Stromaufnahme Isup im on-Zustand ist und eine Position des ersten Endes des Gebers im Bereich der Position des m-ten Sensoreinheits einem Summenstrom Isum = m*Isup + Ipwm entspricht.

Um eine zuverlässige Abbildung der Position mittels des pulsweitenmodulierten Schaltens der Sensoreinheit sicherzustellen, sollte jede Sensoreinheit eine nominale Stromaufnahme in möglichst kurzer Zeit erreichen. Die Zeit bis zum Erreichen einer nominalen Stromaufnahme sollte bevorzugt deutlich unter einer Periodendauer der Pulsweitenmodulation liegen. Hierdurch weist ein mittels des Schaltausgangs der unmittelbar vorausgehenden Sensoreinheit pulsweitenmoduliert geschalteter Sensoreinheit eine von Null verschiedene Stromaufnahme Ipwm auf, die jedoch kleiner als die Stromaufnahme Isup im vollständig angeschalteten Zustand ist.

Die Stromaufnahme Ipwm ist proportional zu der Dauer des on-Zustands des pulsweitenmodulierten Schaltausgangs, d.h. Zu dem Tastgrad der Pulsweitenmodulation, wobei der Tastgrad das Verhältnis von on-Zustand zu off-Zustand innerhalb einer Periode der Pulsweitenmodulation angibt. Ober den Tastgrad wird ein zwischen dem ersten Schwellwert und dem zweiten Schwellwert liegendes Sensorsignal bzw. die Höhe des Sensorsignals auf die Stromaufnahme Ipwm abgebildet und ist so durch Messung des Summenstroms bestimmbar.

In der pulsweitenmodulierten, nicht-invertierenden Ausführungsform setzt sich der Summenstrom aus einem ganzzahligen Vielfachen der Stromaufnahme Isup für alle vollständig eingeschalteten Sensoreinheiten und gegebenenfalls einem Anteil Ipwm mit 0<Ipwm<Isup einer pulsweitenmoduliert geschalteten Sensoreinheit zusammen. Neben einer von dem ganzzahligen Vielfachen gelieferten absoluten Position auf einer von den Sensorabständen gerasterten Skala erhält man somit mittels des Rests eine zweite Position, wobei die zweite Position eine relative Positionsinformation auf einer feineren Skala enthält.

Für die Auswertung wird das PWM Signal beispielsweise über einen Tiefpass-Filter in einen linearen Strom- bzw. Spannungslevel gewandelt, z.B. mittels eines Shunt-Widerstands und kann beispielsweise reale Werte zwischen 0 und 1 mit einer Auflösung von 8 bis 16 Bit einnehmen. Die mittels des PWM Signal bestimmte relative Position wird somit in einem analogen Modus bestimmt, während die erste absolute Position in einem digitalen Modus (ganzzahliges Vielfaches) ermittelt wird.

Alternativ sind die Sensoreinheiten so ausgelegt, dass jeder Sensoreinheit für zwischen dem ersten und dem zweiten Sensorsignal liegende Sensorsignale die eigene Stromaufnahme per Pulsweitenmodulation zwischen Isup und 2*Isup steuert, anstatt den Schaltausgang pulsweitenmoduliert zu Schalten. Hierdurch wird die relative Position des ersten Endes des Gebers über einem m-ten Sensoreinheit durch Pulsweitenmodulation der Stromaufnahme der m-ten Sensoreinheit und nicht durch die Stromaufnahme der (m+1)-ten Sensoreinheit abgebildet. An der weiteren Auswertung ändert sich jedoch nichts.

Anstatt den zusätzlichen Strom Ipwm durch eine Pulsweitenmodulation der Stromaufnahme der Sensoreinheit zu erzeugen, wird der die relative Position abbildende Strom Ipwm in einer weiteren alternativen Ausführungsform mittels eines von einem Digital-Analog-Wandler zwischen zwischen Isup und 2*Isup geregelten Analogausgangs bereitgestellt.

In einer zweiten alternativen Ausführungsform ist der off-Zustand des Schaltausgangs jeder Sensoreinheit bei Überschreitung eines ersten Schweliwerts geschaltet, der on-Zustand des Schaltausgangs jeder Sensoreinheit bei Unterschreiten des ersten Schwellwerts geschaltet und der Geber erstreckt sich von dem ersten Ende zumindest entlang eines Teilbereichs der Strecke in Richtung der letzten Sensoreinheit, wobei eine Position des ersten Endes des Gebers im Bereich der Position der m-ten Sensoreinheit einem Summenstrom Isum = m*Isup entspricht.

In der invertierenden Ausführungsform sind in Abwesenheit des Gebers alle Sensoreinheiten eingeschaltet, da für alle Sensorsignale eine Schwellwertunterschreitung vorliegt. Der Geber bewirkt ein Ausschalten der Sensoreinheiten, wobei der Geber in der invertierenden Ausführungsform eine kurze Länge aufweisen kann, wobei sich die Länge von dem ersten Ende in Richtung der letzten Sensoreinheit erstreckt. Die Länge des Gebers muss sich lediglich ausreichen, um eine Schwellwertüberschreitung innerhalb der Sensoreinheit zu bewirken, wenn sich der Geber über dem Sensoreinheit befindet.

Befindet sich das erste Ende über der ersten Sensoreinheit, so detektiert der ersten Sensoreinheit eine Grenzwertüberschreitung und der Schaltausgang der ersten Sensoreinheit ist in den off-Zustand geschaltet, so dass alle folgenden Sensoreinheiten ausgeschaltet werden. Bewegt sich das erste Ende des Gebers über die zweite Sensoreinheit, so detektiert die erste Sensoreinheit eine Schwellwertunterschreitung und schaltet die unmittelbar folgende zweite Sensoreinheit ein. Somit sind immer alle aufeinanderfolgenden Sensoreinheiten von dem ersten Sensoreinheit bis zu der Sensoreinheit eingeschaltet, über der sich das erste Ende des Gebers befindet. Das mittels des gemessenen Summenstroms bestimmbare Vielfache der Stromaufnahme gibt somit die Nummer der Sensoreinheit in der Reihe der entlang der Strecke angeordneten Sensoreinheiten an, über dem sich das erste Ende des Gebers befindet.

Die Position des ersten Endes des Gebers lässt sich zwischen einer Position 1 über dem ersten Sensoreinheit (Schaltausgang der ersten Sensoreinheit im off-Zustand, Isum = 1*Isup) und einer Position PN der letzten Sensoreinheit (Schaltausgang der vorletzten Sensoreinheit im on-Zustand, Isum = N*Isup) bestimmen.

In einer Weiterbildung zur Erhöhung der Genauigkeit der Positionsbestimmung weist jeder Sensoreinheit mindestens einen ersten Schwellwert und einen zweiten Schwellwert auf und der Geber erstreckt sich von dem ersten Ende zumindest entlang eines Teilbereichs der Strecke in Richtung der letzten Sensoreinheit, wobei der zweite Schwellwert kleiner als der erste Schwellwert ist, der off-Zustand des Schaltausgangs jeder Sensoreinheit bei Überschreiten des ersten Schwellwerts geschaltet ist, der on-Zustand des Schaltausgangs jeder Sensoreinheit bei Unterschreiten des zweiten Schwellwerts geschaltet ist, der off-Zustand des Schaltausgangs jeder Sensoreinheit für zwischen dem ersten Schwellwert und dem zweiten Schwellwert liegende Sensorsignale pulsweitenmoduliert geschaltet ist, der Tastgrad der Pulsweitenmodulation umgekehrt proportional zu dem Sensorsignal ist, die Stromaufnahme Ipwm eine mit dem pulsweitenmoduliert geschalteten Schaltausgangs verbundene Sensoreinheit proportional zu dem Tastgrad und kleiner als die Stromaufnahme Isup im on-Zustand ist, eine Position des Ersten Endes des Gebers im Bereich der Position der m-ten Sensoreinheit einem Summenstrom Isum = (m-1)*Isup + Ipwm entspricht.

Die vorbeschriebene Ausführungsform stellt eine invertierende, pulsweitenmodulierte Ausführungsform dar, d.h. in Abwesenheit des Gebers sind alle Sensoreinheiten eingeschaltet und der Geber bewirkt ein Ausschalten der Sensoreinheiten, wobei eine Position innerhalb eines über einem Sensoreinheit befindlichen Bereichs mittels der Pulsweitenmodulation aufgelöst wird. Entsprechend gelten die vorangegangenen Ausführungen hinsichtlich einer Pulsweitenmodulation des Signalausgangs der Sensoreinheiten und hinsichtlich eines invertierten Betriebs der Sensoreinheiten.

Gemäß einer anderen Weiterbildung weist die Stromaufnahme Isup der Sensoreinheiten untereinander eine Varianz von maximal 10% auf und/oder die Stromaufnahme jeder Sensoreinheit ist stabilisiert oder getrimmt, um eine besonders zuverlässige, fehlerfreie Positionsbestimmung sicherzustellen. In einer weiteren Ausführungsform sind die Abstände zwischen Sensoreinheiten zur Vereinfachung der Auswertung gleich.

Gemäß einer Weiterbildung ist das erste Ende des Gebers als Spitze oder als Kante ausgebildet und/oder ein Abstand des Gebers zu der Strecke ist entlang der gesamten Länge des Gebers konstant oder nimmt zumindest im Bereich des ersten Endes zu. Mittels eines sich verjüngenden ersten Endes oder eines von den Sensoreinheiten weg gebogenen ersten Endes lässt sich insbesondere die Genauigkeit der mittels Pulsweitenmodulation bestimmten relativen Position innerhalb eines über einem einzelnen Sensoreinheit befindlichen Bereichs erhöhen und eine Ausgangskennlinie linearisieren.

In einer weiteren Ausführungsform sind die Sensoreinheiten Hall-Sensoren, wobei der mindestens eine Magnetfeldsensor eine lateral-messende Hall-Platte oder eine vertikal messende Hall-Platte ist. Geeignete Sensoreinheiten sind beispielsweise 3-Draht Hall Schalter oder 3-Draht Linear Sensoreinheiten mit einem Pulsweitenmodulationsausgang. Als Magnetfeldsensoren lassen sich auch magnetoresistive Sensoren verwenden.

Der Schaltausgang weist gemäß einer Weiterbildung einen open-drain Transistor auf, wobei eine Strombelastbarkeit des open-drain Ausgangs des open-drain Transistor bevorzugt mindestens 100mA und/oder ein Eingangswiderstand des open-drain Transistors bevorzugt höchstens 100mΩ beträgt. Um auch bei einer hohen Anzahl von Sensoreinheiten den Beitrag aller eingeschalteten Sensoreinheiten zu dem zu messenden Summenstrom sicherzustellen, muss die Strombelastbarkeit der open-drain Transistoren der Sensoreinheiten möglichst hoch sein. Um auch bei einer hohen Anzahl von Sensoreinheiten noch eine möglichst niedrige Versorgungsspannung nutzen zu können, darf der Eingangswiderstand des open-drain Transistors nicht zu hoch sein.

In einer kostengünstigeren Ausführungsform ist die letzte Sensoreinheit durch einen Widerstand ersetzt. Ein definierter Stromlevel wird durch Anpassung des Werts des Widerstands an die Versorgungsspannung erreicht.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:

Figur 1     eine schematische Ansicht einer ersten Ausführungsform einer erfindungsgemäßen Positionsbestimmungseinheit mit Sensoreinheiten in einer ersten Ausführungsform,

Figur 2     eine schematische Aufsicht eine in der ersten Ausführungsform Sensoreinheit,

Figur 3     eine zweite Ausführungsform eine Sensoreinheits,

Figur 4     eine dritte Ausführungsform einer Sensoreinheit,

Figur 5     eine vierte Ausführungsform einer Sensoreinheit,

Figur 6     eine schematische Ansicht auf eine zweite Ausführungsform einer erfindungsgemäßen Positionsbestimmungseinheit,

Figur 7     eine schematische Ansicht auf eine dritte Ausführungsform einer erfindungsgemäßen Positionsbestimmungseinheit,

Figur 8     eine schematische Ansicht auf eine vierte Ausführungsform einer erfindungsgemäßen Positionsbestimmungseinheit

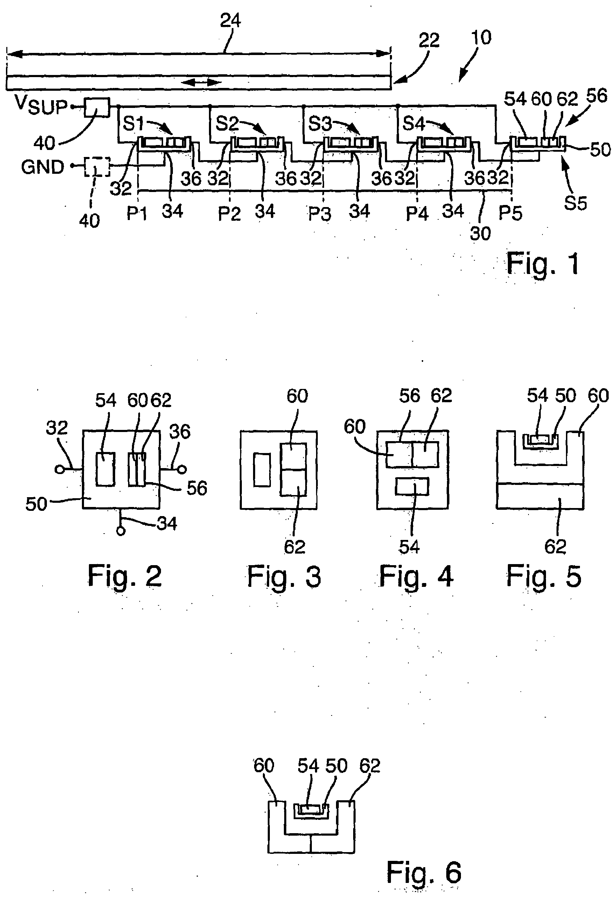

Die Abbildung der Figur 1 zeigt schematische Ansicht einer erfindungsgemä-ßen Positionsbestimmungseinheit 10, aufweisend eine Anzahl N=5 gleichartiger Sensoreinheiten Sn=1...N, einen Geber 20 und eine Strommesseinheit 40.

Die Sensoreinheiten sind entlang einer Strecke 30 in gleichmäßigen Abständen 32 an Positionen Pn=1...N angeordnet, wobei eine erste Sensoreinheit S1 an einem Anfang der Strecke und eine letzte Sensoreinheit SN an einem Ende der Strecke 30 angeordnet ist.

Jede Sensoreinheit Sn weist einen Versorgungsspannungsanschluss 32, einen zweiten Versorgungsspannungsanschluss 34 und einen Schaltausgang 36 auf, wobei der Schaltausgang 36 einen on-Zustand und einen off-Zustand aufweist. Der Schaltausgang 36 einer jeden Sensoreinheit Sn schaltet im dargestellten Ausführungsbeispiel in Abhängigkeit von einem ersten Schwellwert aufgrund einer Schwellwertüberschreitung des Sensorsignals der Sensoreinheit Sn in den on-Zustand und aufgrund einer Unterschreitung des ersten Schwellwerts in den off-Zustand.

Ferner weist jeder Sensoreinheit Sn einen Träger 50 mit einer Oberfläche 52, einen auf der Oberfläche 52 angeordnete Messeinheit 54 sowie einen auf der Oberfläche 52 angeordneten Bias-Magneten 56 mit einem ersten Pol 60 und einem zweiten Pol 62 auf. Der Bias-Magnet 56 ist in einer von dem Anfang der Strecke zu dem Ende der Strecke 30 zeigenden ersten Richtung jeweils hinter der Messeinheit 54 der Sensoreinheit angeordnet und so ausgerichtet, dass der erste Pol 60 in der ersten Richtung vor dem zweiten Pol 62 angeordnet ist. Träger 50, Messeinheit 54 und Bias-Magnet 56 sind in Figur 2 in einer Aufsicht schematisch dargestellt. In dem in Figur 2 dargestellten Ausführungsbeispiel weist die Messeinheit 54 ferner zwei zueinander beabstandete Magnetfeldsensoren 54.1 und 54.2 auf.

Der erste Versorgungsspannungsanschiuss 32 der ersten Sensoreinheit S1 ist an eine Versorgungsspannung Vsup angeschlossen und der zweite Versorgungsspannungsanschluss 34 der ersten Sensoreinheit S1 ist an ein Referenzpotential GND angeschlossen, so dass die erste Sensoreinheit S1 bei Inbetriebnahme der Positionsbestimmungseinheit 10 immer eingeschaltet ist und daher immer eine Stromaufnahme Isup aufweist.

Alle weiteren Sensoreinheiten Sn=2...N sind mittels des jeweiligen Versorgungsspannungsanschlusses 32 ebenfalls an die Versorgungsspannung Vsup angeschlossen. Der zweite Versorgungsspannungsanschluss 34 der weiteren Sensoreinheiten Sn=2...N ist jeweils mit dem Schaltausgang 36 der entlang der Strecke 30 unmittelbar vorausgehenden Sensoreinheit Sn-1 verbunden. Hierdurch werden die weiteren Sensoreinheiten Sn=2...N jeweils mittels der unmittelbar vorausgehenden Sensoreinheit Sn-1 aufgrund einer durch die unmittelbar vorausgehenden Sensoreinheit detektierten Schwellwertüberschreitung eingeschaltet. Eine solche Verschaltung wird auch als Daisy-Chain bezeichnet. In dem eingeschalteten Zustand weisen die weiteren Sensoreinheiten Sn=2...N jeweils ebenfalls eine Stromaufnahme Isup auf, wobei die jeweiligen Stromaufnahmen aller Sensoreinheiten Sn aufgrund der Gleichartigkeit der Sensoreinheiten eine geringe Varianz aufweisen.

Zur Kostenreduzierung lässt sich die letzte Sensoreinheit SN auch als kostengünstigerer Stromverbraucher, z.B. als Widerstand mit an die Versorgungsspannungen angepasstem Widerstandswert und ohne einen dem Schaltausgang entsprechenden Anschluss ausführen.

Der Geber 20 ist aus einem ferromagnetischen Material besteht oder ein ferromagnetisches Material umfasst und weist ein erstes Ende 22 und eine Länge 24 auf. Der Geber 20 ist parallel zu der Strecke 30 beweglich, wobei sich hierdurch auch das erste Ende 22 entlang der gesamten Strecke 30 verschiebt und die Länge 24 des Gebers 22 größer oder gleich der Länge der Strecke 30 ist.

In dem dargestellten Ausführungsbeispiel ist die Strommesseinheit 40 in der Leitung der ersten Versorgungsspannung Vsup unmittelbar vor einem ersten Spannungsknoten des ersten Sensors S1 eingeschleift ist. Alternativ lässt sich die Strommesseinheit 40 auch in die Leitung für das Referenzpotential GND vor dem zweiten Versorgungsspannungsanschluss 34 einschleifen - gestrichelt dargestellt.

In beiden Ausführungsformen lässt sich mittels der Strommesseinheit 40 ein Summenstrom Isum auf einfache Weise bestimmen, wobei sich der Summenstrom aus den Stromaufnahmen Isup aller eingeschalteter Sensoren Sn ergibt. Der Summenstrom Isum entspricht somit einem Vielfachen m der Stromaufnahme Isup eines einzelnen Sensors Sn:

$$Isum = m * Isup;$$

Im dargestellten Ausführungsbeispiel lässt sich aus der folgenden Gleichung anhand des messbaren Faktors F1 bestimmen, über welchem Sensoreinheit Sn sich das erste Ende 22 des Gebers 20 befindet:

$$n = m - 1;$$

Folglich befindet sich das erste Ende 22 an der Position Pm-1 des (m-1)-ten Sensoreinheites Sm-1.

Befindet sich das erste Ende 22 des Gebers 20, wie im Ausführungsbeispiel dargestellt, über dem dritten Sensoreinheit S3, also an der Position P3 der dritten Sensoreinheit S3, so überdeckt der Geber 20 die Sensoreinheiten S1, S2 und S3. Für die Sensoreinheiten S1, S2, S3 liegt das jeweilige Sensorsignal über dem ersten Schwellwert, der jeweilige Schaltausgang ist in den on-Zustand geschaltet, so dass sich die Sensoreinheiten S1 bis S4 in dem eingeschalteten Zustand befinden. Nur Sensoreinheit S5 befindet sich noch in einem ausgeschalteten Zustand. Somit tragen die vier Sensoreinheiten zu dem Summenstrom Isum bei, der Faktor m beträgt folglich vier.

Zur Erhöhung der Genauigkeit der Positionsbestimmung weisen die Sensoreinheiten Sn=1...N gemäß einer Weiterbildung jeweils einen zweiten Schwellwert auf, wobei der zweite Schwellwert kleiner als der erste Schwellwert ist. Bei Überschreiten des ersten Schwellwerts ist der Schaltausgang jeder Sensoreinheit in den on-Zustand geschaltet, bei Unterschreiten des zweiten Schwellwerts ist der Schaltausgang jeweils in den off-Zustand geschaltet. Für zwischen dem ersten und dem zweiten Schwellwert liegende Sensorsignale wird der Schaltausgang pulsweitenmoduliert von dem off-Zustand in den on-Zustand geschaltet. Die Pulsweitenmodulation weist einen Tastgrad auf, der Proportional zu dem Sensorsignal der jeweiligen Sensoreinheit ist.

Die Stromaufnahme Ipwm eines pulsweitenmoduliert geschalteten Sensoreinheit Sn, also eines mit einem pulsweitenmodulierten Schaltausgang eines unmittelbar vorausgehenden Sensoreinheit Sn-1 verbundenen Sensoreinheit Sn, ist geringer als die Stromaufnahme Isup eines vollständig eingeschalteten Sensoreinheit Sn. Durch die Proportionalität des Tastgrads der Pulsweitenmodulation zu dem Sensorsignal ist auch die Stromaufnahme Ipwm des pulsweitenmoduliert geschalteten Sensoreinheit proportional zu dem Sensorsignal und damit proportional zu der Position des ersten Endes 22 des Gebers im Bereich oberhalb des vorausgehenden Sensoreinheit Sn-1. Hierdurch wird die Position Pp des ersten Endes 22 des Gebers 20 im Bereich einer einzelnen Sensoreinheit genauer aufgelöst.

Befindet sich das erste Ende 22, wie in Figur 1 dargestellt, über dem dritten Sensoreinheit, so setzt sich für die Ausführungsvariante mit Pulsweitenmodulation der Summenstrom Isum aus den Stromaufnahmen Isup der vollständig eingeschalteten Sensoreinheiten S1, S2, S3 und der Stromaufnahme Ipwm der Sensoreinheit S4 zusammen, da der Sensoreinheit S4 nicht vollständig eingeschaltet ist, sondern von dem pulsweitenmoduliert geschalteten Schaltausgang der Sensoreinheit S3 entsprechend pulsweitenmodulirt eingeschaltet wird. Der Sensoreinheit S5 trägt nicht zu dem Summenstrom Isum bei:

$$Isum = 3 * Isup + Ipwm.$$

Folglich ist anhand des Vielfachen m der Stromaufnahme Isup, hier drei, ablesbar, über welchem Sensoreinheit Sn sich das erste Ende 22 des Gebers befindet. Indem alle möglichen Werte des Stroms Ipwm auf eine einer Breite eines Sensoreinheit entlang der Strecke oder auf eine dem Abstand zwischen zwei Sensoreinheiten entsprechenden Weg abgebildet werden und der dem gemessenen Strom Ipwm Anteil an der Breite oder dem Weg bestimmt wird, kann die Position des ersten Endes 22 des Gebers 20 im Bereich des dritten Sensoreinheit genauer bestimmt werden.

In den Abbildungen der Figur 3 bis 6 sind alternative Ausführungsformen der Sensoreinheiten dargestellt. Im Folgenden werden nur die Unterschiede zu der Abbildung der Figur 1 erläutert. In der in Figur 3 dargestellten Ausführungsform sind der erste Pol 60 und der zweite Pol 62 in einer senkrecht zu der Strecke verlaufenden Richtung hintereinander angeordnet und befinden sich somit auf derselben Höhe hinsichtlich der Strecke 30. In der in Figur 4 dargestellten Ausführungsform ist der Bias-Magnet 56 in einer von dem Anfang der Strecke zu dem Ende der Strecke zeigenden ersten Richtung neben der Messeinheit angeordnet, wobei der ersten Pol in der ersten Richtung vor dem zweiten Pol angeordnet ist. Der Bias-Magnet 56 der in Figur 5 dargestellten Ausführungsform weist einen U-förmigen ersten Pol 60 auf, wobei die U-form aus zwei parallel zueinander verlaufenden Seitenwänden und einem die beiden Seitenwände verbindenden Boden gebildet wird. Der zweite Pol 62 ist an dem Boden angeordnet. D.h. der gesamte Bias-Magnet ist U-förmig, wobei die Seitenwände und ein an die Seitenwände angrenzender Teil des Bodens den ersten Pol 60 bilden, während ein von den Seitenwänden abgewandter Teil des Bodens den zweiten Pol 62 bilden. Der Träger 50 mit der Messeinheit 54 ist vollständig zwischen den Seitenwänden positioniert und die Oberfläche des Trägers ist senkrecht zu den Seitenwänden und parallel zu dem Boden ausgerichtet. Der Bias-Magnet der

in Figur 6 dargestellten Ausführungsform ist ebenfalls U-förmig, wobei eine erste Seitenwand und ein erster, an die erste Seitenwand angrenzender Teil eines Bodens den ersten Pol 60 bilden und eine zweite Seitenwand sowie ein zweiter, an die zweite Seitenwand angrenzender Teil des Bodens den zweiten Pol 62 bilden. Der Träger 50 mit der Messeinheit 54 ist vollständig zwischen der ersten und der zweiten Seitenwand angeordnet, wobei die Oberfläche des Trägers parallel zu dem Boden und senkrecht zu den Seitenwänden ausgerichtet ist.

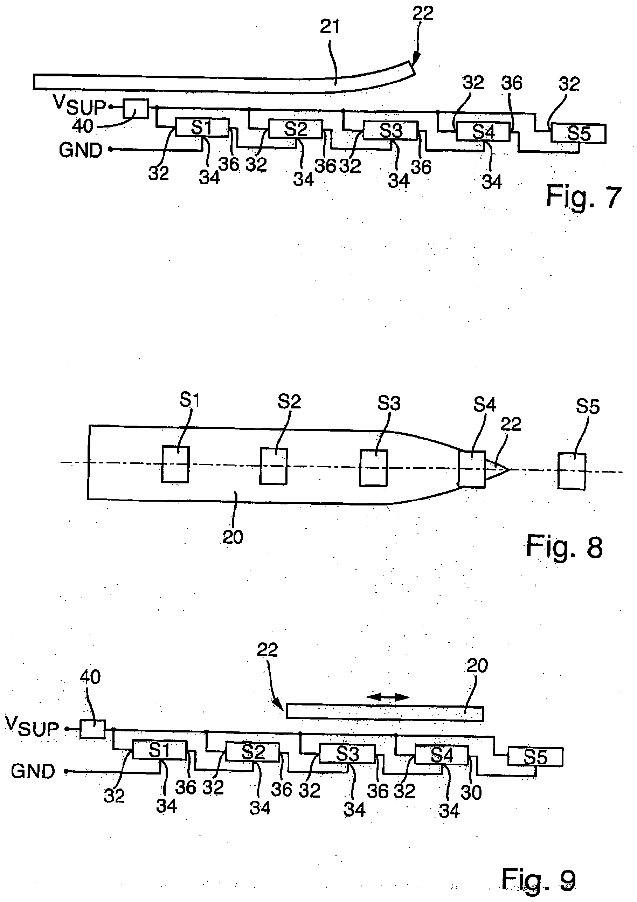

In den Abbildungen der Figuren 7 und 8 sind vorteilhafte Weiterbildungen des in Figur 1 gezeigten Gebers dargestellt. Im Folgenden werden nur die Unterschiede zu der Abbildung der Figur 1 erläutert. Zur Erhöhung der Übersichtlichkeit sind in die Sensoreinheiten Sn vereinfacht dargestellt. Während der in Figur 1 dargestellte Geber 20 über die gesamte Länge 24 des Gebers 20 einen konstanten Abstand zu der Strecke 30 aufweist, nimmt der Abstand des in Figur 2 dargestellten Geber 20 in Richtung des ersten Endes 22 zu, da der Geber 20 in einem Bereich vor dem ersten Ende 22 gebogen ausgebildet ist.

In Figur 8 ist eine Positionsbestimmungseinheit 10 in einer Aufsicht skizziert. Für eine bessere Übersichtlichkeit sind nur der Geber 20 und die Sensoreinheiten Sn dargestellt. Der in Figur 8 dargestellte Geber 20 weist ein spitz zulaufendes erstes Ende 22 auf.

Die in den Figuren 7 und 8 dargestellten Ausführungsformen des ersten Endes 22 des Gebers 20 ermöglichen es, die Genauigkeit der Positionsbestimmung bei einem pulsweitenmodulierten Betrieb zu erhöhen.

In der Abbildung der Figur 9 ist eine weitere Ausführungsform einer Positionsbestimmungseinheit dargestellt, wobei die Sensoreinheiten Sn vereinfacht dargestellt sind. Im Folgenden werden nur die Unterschiede zu der Abbildung der Figur 1 erläutert. Die dargestellten Sensoreinheiten Sn sind invertierend, so dass die Schaltausgänge der Sensoreinheiten jeweils bei Überschreiten des ersten Schwellwerts in den off-Zustand und bei Unterschreiten des ersten Schwellwerts in den on-Zustand schalten.

Der Geber 20 erstreckt sich von dem ersten Ende 22 in Richtung des letzten Sensoreinheit SN, wobei die Länge 24 des Gebers 20 nur einen Teilbereich der Strecke 30 überdeckt.

Bei Abwesenheit des Gebers 20 befinden sich alle Sensoreinheiten Sn in dem eingeschalteten Zustand, da für jeden Sensoreinheit Sn der erste Schwellwert unterschritten ist und das Ausgangssignal 36 in den on-Zustand geschaltet ist.

Befindet sich das erste Ende 22 des Gebers in einem Bereich eines m-ten Sensoreinheit, z.B. wie dargestellt in dem Bereich der dritten Sensoreinheit S3, also an der Position P3, so überschreitet das Sensorsignal der dritten Sensoreinheit S3 den ersten Schwellwert und das Ausgangssignal 36 des dritten Sensoreinheit S3 ist in den off-Zustand geschaltet. Hierdurch befinden sich alle folgenden Sensoreinheiten S4, S5 in dem ausgeschalteten Zustand und weisen keine Stromaufnahme Isup auf. Zu dem Summenstrom Isum tragen nur die Stromaufnahmen Isup der entlang der Strecke vorausgehenden Sensoreinheiten S1 und S2 bei. Somit kann anhand des Faktor m aus Isum = m* Isup der Sensoreinheit Sn bzw. die Position Pn der Sensoreinheit Sn, an der sich das erste Ende 22 des Gebers 20 befindet, wie folgt bestimmt werden:

$$n = \dot{m};$$

Die hinsichtlich des Äusführungsbeispiels gemäß Figur 1 beschriebene Pulsweitenmodulation, die in den Figuren 3 bis 6 dargestellten Ausführungsformen der Sensoreinheiten Sn sowie die in den Figuren 7 und 8 beschriebenen Ausführungsformen des ersten Endes des Gebers zur Erhöhung der Genauigkeit der Positionsbestimmungen sind in dem zu Figur 9 erläuterten invertierten Modus entsprechend möglich.

## Patentansprüche

1. Positionsbestimmungseinheit (10),

    - aufweisend eine Anzahl von N, in vorbestimmten Abständen an Positionen (Pn) entlang einer Strecke (30) angeordneten, gleichartigen Sensoreinheiten (Sn=1..N) und einen Geber (20),
    - wobei der Geber (20) entlang der Strecke (30) beweglich ist und ein erstes Ende (22) und ein von dem ersten Ende (22) parallel zu der Strecke (30) verlaufende Länge (24) aufweist und ein ferromagnetisches Material umfasst,
    - wobei jede Sensoreinheit (Sn) einen Träger (50), einen ersten Versorgungsspannungsanschluss (32), einen zweiten Versorgungsspannungsanschluss (34), eine Messeinheit (54) mit einem Schaltausgang (36) und einen Bias-Magneten (56) aufweist,
    - wobei die Messeinheit (54), um ein von dem Messsignal des Magnetfeldsensor abhängiges Sensorsignal bereitzustellen mindestens einen Magnetfeldsensor (54.1, 54.2) aufweist und die Messeinheit (54) mit einer Unterseite auf einer Oberseite des Trägers (50) angeordnet ist,
    - wobei der Bias-Magnet (56) einen ersten Pol und einen zweiten Pol aufweist,
    - wobei der Schaltausgang (36) in Abhängigkeit von einer Schwellwertüberschreitung oder einer Schwellwertunterschreitung des Sensorsignals in einen on-Zustand oder einen off-Zustand geschaltet ist,
    - wobei der erste Versorgungsspannungsanschluss (32) jeder Sensoreinheit (Sn) mit einer Versorgungsspannung (Vsup) verbunden ist,

- wobei ein erste Sensoreinheit (S1) an einem Anfang der Strecke (30) angeordnet ist,
- wobei eine letzter Sensoreinheit (SN) an einem Ende der Strecke (30) angeordnet ist,

**dadurch gekennzeichnet, dass**

- der zweite Versorgungsspannungsanschluss (34) der ersten Sensoreinheit (S1) mit einem Referenzpotential (GND) verbunden ist und die erste Sensoreinheit (S1) eine Stromaufnahme Isup aufweist,

-- der zweite Versorgungsspannungsanschluss (34) jedes weiteren Sensor (Sn>1) mit dem Schaltausgang (36) der vorausgehenden Sensoreinheit (Sn-1) verbunden ist, und der jeweilige weitere Sensoreinheit (Sn) mittels des Schaltausgangs (36) der vorausgehenden Sensoreinheit (Sn-1) einschaltbar oder ausschalbar ist und die jeweilige weitere Sensoreinheit (Sn) im eingeschalteten Zustand eine Stromaufnahme Isup aufweist,

- eine Strommesseinheit (40) vorgesehen ist und die Strommesseinheit vor dem ersten Versorgungsspannungsanschluss (32) der ersten Sensoreinheit (S1) oder vor dem zweiten Versorgungsspannungsanschluss (34) der ersten Sensoreinheit (S1) angeordnet ist,
- wobei die Stromaufnahmen Isup aller eingeschalteten Sensoreinheiten (Sn) zu einem mittels der Strommesseinheit (40) gemessenen Summenstrom Isum beitragen, wobei der Summenstrom Isum ein Vielfaches der Stromaufnahmen Isup beträgt und zu einer Position (Pp) des ersten Endes (22) des Gebers (20) proportional ist.

2. Positionsbestimmungseinheit (10) nach Anspruch 1, **dadurch gekennzeichnet, dass** der Bias-Magnet (56) jeder Sensoreinheit (Sn) in einer von dem Anfang der Strecke (30) zu dem Ende der Strecke (30) zeigenden ersten Richtung vor oder hinter der Messeinheit (54) auf der Oberfläche des Trägers (50) angeordnet ist, wobei der erste Pol (60) und der zweite Pol (62) entlang der ersten Richtung oder senkrecht zu der ersten Richtung angeordnet sind.

3. Positionsbestimmungseinheit (10) nach Anspruch 1, **dadurch gekennzeichnet, dass** der Bias-Magnet (56) in einer senkrecht zu einer von dem Anfang der Strecke (30) zu dem Ende der Strecke (30) zeigenden ersten Richtung ausgebildeten zweiten Richtung vor oder hinter der Messeinheit (54) auf der Oberfläche des Trägers (50) angeordnet ist, wobei der erste Pol (60) und der zweite Pol (62) entlang der Linie oder senkrecht zu der zweiten Richtung angeordnet sind.

4. Positionsbestimmungseinheit (10) nach einem der Ansprüche 1 bis 3, **dadurch gekennzeichnet, dass** der Bias-Magnet (56) jeder Sensoreinheit (Sn) U-förmig mit zwei parallel zueinander verlaufende Seitenwänden und einem die zwei Seitenwände verbindenden Boden ausgebildet ist,

- wobei die beiden Seitenwände und ein sich an die Seitenwände anschließender Teil des Bodens den ersten Pol (60) bilden und ein von den Seitenwänden abgewandter zweiter Teil des Bodens den zweiten Pol (62) bildet,
- wobei der Träger (50) und die Messeinheit (54) vollständig zwischen den Seitenwänden angeordnet sind und
- wobei die Oberfläche des Trägers (50) senkrecht zu den Seitenwänden ausgerichtet ist.

5. Positionsbestimmungseinheit (10) nach einem der Ansprüche 1 bis 4, **dadurch gekennzeichnet, dass** der Bias-Magnet (56) jeder Sensoreinheit (Sn) U-förmig mit einer ersten Seitenwand, einer parallel zu der ersten verlaufenden zweiten Seitenwand und einem die erste und die zweite Seitenwand verbindenden Boden ausgebildet ist,

- wobei die erste Seitenwand und ein sich an die erste Seitenwand anschließender erster Teil des Bodens den ersten Pol (60) bilden und die zweite Seitenwand und ein sich an die zweite Seitenwand anschließender zweiter Teil des Bodens den zweiten Pol (62) bilden,
- wobei der Träger (50) und die Messeinheit (54) vollständig zwischen der ersten und der zweiten Seitenwand angeordnet sind,
- wobei die Oberfläche des Trägers (50) senkrecht zu der ersten und der zweiten Seitenwand ausgerichtet ist.

6. Positionsbestimmungseinheit (10) nach einem der Ansprüche 1 bis 5, **dadurch gekennzeichnet, dass**

- der on-Zustand des Schaltausgangs (36) jeder Sensoreinheit (Sn) bei Überschreiten eines ersten Schwellwerts geschaltet ist
- der off-Zustand des Schaltausgangs (36) jeder Sensoreinheit (Sn) bei Unterschreiten des ersten Schwellwerts geschaltet ist und
- sich die Länge (24) des Gebers (20) von dem ersten Ende (22) mindestens bis zu dem ersten Sensoreinheit S1 erstreckt,
- wobei eine Position (Pp) des ersten Endes (22) des Gebers (20) im Bereich der Position (Pm) des m-ten Sensoreinheit (Sm= einem Summenstrom Isum = (m+1)*Isup entspricht.

7. Positionsbestimmungseinheit (10) nach einem der Ansprüche 1 bis 5, **dadurch gekennzeichnet, dass**

- jede Sensoreinheit (Sn) mindestens den ersten Schwellwert und einen zweiten Schwellwert aufweist und

- sich die Länge (24) des Gebers (20) von dem ersten Ende (22) mindestens bis zu dem ersten Sensoreinheit (S1) erstreckt,

- wobei der zweite Schwellwert kleiner als der erste Schwellwert ist,

- wobei der on-Zustand des Schaltausgangs (36) jeder Sensoreinheit (Sn) bei Überschreiten des ersten Schwellwerts geschaltet ist,

- wobei der off-Zustand des Schaltausgangs (36) jeder Sensoreinheit (Sn) bei Unterschreiten des zweiten Schwellwerts geschaltet ist,

- wobei der on-Zustand des Schaltausgangs (36) jeder Sensoreinheit (Sn) für zwischen dem zweiten Schwellwert und dem ersten Schwellwert liegende Sensorsignale pulsweitenmoduliert geschaltet ist,

- wobei ein Tastgrad der Pulsweitenmodulation proportional zu dem Sensorsignal ist,

- wobei die Stromaufnahme Ipwm eines mit dem pulsweitenmoduliert geschalteten Schaltausgangs (36) verbundenen Sensoreinheit (Sn+1) proportional zu dem Tastgrad und kleiner als die Stromaufnahme Isup im on-Zustand ist,

- wobei eine Position (Pp) des ersten Endes (22) des Gebers (20) im Bereich der Position (Pm) des m-ten Sensoreinheit (Sm) einem Summenstrom Isum = m*Isup + Ipwm entspricht.

8. Positionsbestimmungseinheit (10) nach einem der Ansprüche 1 bis 5, **dadurch gekennzeichnet, dass**

- der off-Zustand des Schaltausgangs (36) jeder Sensoreinheit (Sn) bei Überschreitung eines ersten Schwellwerts geschaltet ist,

- der on-Zustand des Schaltausgangs (36) jeder Sensoreinheit (Sn) bei Unterschreiten des ersten Schwellwerts geschaltet ist und

- sich der Geber (20) von dem ersten Ende (22) zumindest entlang eines Teilbereichs der Strecke (30) in Richtung des letzten Sensoreinheit (SN) erstreckt,

- wobei eine Position (Pp) des ersten Endes (22) des Gebers (20) im Bereich der Position (Pm) des m-ten Sensoreinheit (Sm) einem Summenstrom Isum = m*Isup entspricht.

9. Positionsbestimmungseinheit (10) nach einem der Ansprüche 1 bis 5, **dadurch gekennzeichnet, dass** zur Erhöhung der Genauigkeit der Positionsbestimmung

- jeder Sensoreinheit (Sn) mindestens einen ersten Schwellwert und einen zweiten Schwellwert aufweist und

- sich der Geber (20) von dem ersten Ende (22) zumindest entlang eines Teilbereichs der Strecke (30) in Richtung des letzten Sensoreinheit (SN) erstreckt,

- wobei der zweite Schwellwert kleiner als der erste Schwellwert ist,

- wobei der off-Zustand des Schaltausgangs (36) jedes Sensoreinheit (Sn) bei Überschreiten des ersten Schwellwerts geschaltet ist,

- wobei der on-Zustand des Schaltausgangs (36) jedes Sensoreinheit (Sn) bei Unterschreiten des zweiten Schwellwerts geschaltet ist,

- wobei der off-Zustand des Schaltausgangs (36) jedes Sensoreinheit (Sn) für zwischen dem ersten Schwellwert und dem zweiten Schwellwert liegende Sensorsignale pulsweitenmoduliert geschaltet ist, - wobei der Tastgrad der Pulsweitenmodulation umgekehrt proportional zu dem Sensorsignal ist,

- wobei die Stromaufnahme Ipwm eines mit dem pulsweitenmoduliert geschalteten Schaltausgangs (36) verbundenen Sensoreinheit (Sn+1) proportional zu dem Tastgrad und kleiner als die Stromaufnahme Isup im on-Zustand ist,

- wobei eine Position (Pp) des ersten Endes (22) des Gebers (20) im Bereich der Position (Pm) des m-ten Sensoreinheit (Sm) einem Summenstrom Isum = (m-1)*Isup + Ipwm entspricht.

10. Positionsbestimmungseinheit (10) nach einem der vorhergehenden Ansprüche, **dadurch gekennzeichnet, dass** die Stromaufnahme Isup der Sensoreinheiten (Sn) untereinander eine Varianz von maximal 10% aufweist.

11. Positionsbestimmungseinheit (10) nach einem der vorhergehenden Ansprüche, **dadurch gekennzeichnet, dass** die Stromaufnahme Isup jeder Sensoreinheit (Sn) stabilisiert oder getrimmt ist.

12. Positionsbestimmungseinheit (10) nach einem der vorhergehenden Ansprüche, **dadurch gekennzeichnet, dass** die Abstände zwischen Sensoreinheiten (Sn) gleich sind.

13. Positionsbestimmungseinheit (10) nach einem der vorhergehenden Ansprüche, **dadurch gekennzeichnet, dass** das erste Ende (22) des Gebers (20) als Spitze oder als Kante ausgebildet ist.

14. Positionsbestimmungseinheit (10) nach einem der vorhergehenden Ansprüche, **dadurch gekennzeichnet, dass** ein Abstand des Gebers (20) zu der Strecke (30) entlang der gesamten Länge (24) des Gebers (20) konstant ist oder zumindest im Bereich des ersten Endes (22) zunimmt.

15. Positionsbestimmungseinheit (10) nach einem der vorhergehenden Ansprüche, **dadurch gekenn-**

**zeichnet, dass** die Sensoreinheiten (Sn) Hall-Sensoren sind, wobei das der Magnetfeldsensor (54.1, 54.2) eine lateral-messende Hall-Platte oder eine vertikal messende Hall-Platte ist.

16. Positionsbestimmungseinheit (10) nach einem der vorhergehenden Ansprüche, **dadurch gekennzeichnet, dass** der Schaltausgang (36) einen open-drain Transistor aufweist.

17. Positionsbestimmungseinheit (10) nach Anspruch 16, **dadurch gekennzeichnet, dass** eine Strombelastbarkeit eines open-drain Ausgangs des open-drain Transistor mindestens 100mA beträgt.

18. Positionsbestimmungseinheit (10) nach Anspruch 16 oder 17, **dadurch gekennzeichnet, dass** ein Eingangswiderstand des open-drain Transistors höchstens 100mΩ beträgt.

19. Positionsbestimmungseinheit (10) nach einem der vorhergehenden Ansprüche, **dadurch gekennzeichnet, dass** die letzte Sensoreinheit (SN) durch einen Widerstand ersetzt ist.

**Claims**

1. Position determining unit (10),
comprising a number of N identical sensor units (Sn = 1 ... N), which are arranged at predetermined spacings at positions (Pn) along a path (30), and a transmitter (20),

   - wherein the transmitter (20) is movable along the path (30) and has a first end (22) and a length (24) extending from the first end (22) parallel to the path (30) and comprises a ferromagnetic material,
   - wherein each sensor unit (Sn) comprises a support (50), a first supply voltage terminal (32), a second voltage supply terminal (34), a measuring unit (54) with a switch output (36) and a bias magnet (56),
   - wherein the measuring unit (54) comprises at least one magnetic field sensor (54.1, 54.2) in order to provide a sensor signal dependent on the measurement signal of the magnetic field sensor, and the measuring unit (54) is arranged by a lower side on an upper side of the support (50),
   - wherein the bias magnet (56) has a first pole and a second pole,
   - wherein the switch output (36) is switched to an on state or an off state in dependence on the sensor signal exceeding a threshold value or falling below a threshold value,
   - wherein the first supply voltage terminal (32) of each sensor (Sn) is connected with a supply voltage (Vsup),
   - wherein a first sensor unit (S1) is arranged at a start of the path (30) and
   - wherein a last sensor unit (SN) is arranged at an end of the path (30), **characterised in that**
   - the second supply voltage terminal (34) of the first sensor unit (S1) is connected with a reference potential (GND) and the first sensor unit (S1) has a current take up Isup,
   - the second supply voltage terminal (34) of each further sensor (Sn>1) is connected with the switch output (36) of the preceding sensor unit (Sn-1) and the respective further sensor unit (Sn) can be switched on or off by means of the switch output (36) of the preceding sensor unit (Sn-1) and the respective further sensor unit (Sn) in the switched-on state has a current take up Isup,
   - a current measuring unit (40) is provided and the current measuring unit is arranged in front of the first supply voltage terminal (32) of the first sensor unit (S1) or in front of the second supply voltage terminal (34) of the first sensor unit (S1),
   - wherein the current take ups Isup of all switched-on sensor units (Sn) contribute to a sum current Isum measured by means of the current measuring unit (40) and wherein the sum current Isum is a multiple of the current take ups Isup and is proportional to a position (Pp) of the first end (22) of the transmitter (20).

2. Position determining unit (10) according to claim 1, **characterised in that** the bias magnet (56) of each sensor unit (Sn) is arranged on the surface of the support (50) in front of or behind the measuring unit (54) in a first direction pointing from the start of the path (30) to the end of the path (30), wherein the first pole (60) and the second pole (62) are arranged along the first direction or perpendicularly to the first direction.

3. Position determining unit (10) according to claim 1, **characterised in that** the bias magnet (56) is arranged on the surface of the support (50) in front of or behind the measuring unit (54) in a second direction formed perpendicularly to a first direction pointing from the start of the path (30) to the end of the path (30), wherein the first pole (60) and the second pole (62) are arranged along the line or perpendicularly to the second direction.

4. Position determining unit (10) according to any one of claims 1 to 3, **characterised in that** the bias magnet (56) of each sensor unit (Sn) is formed to be U-shaped with two mutually parallelly extending side walls and a base connecting the two side walls,

- wherein the two side walls and a part, which is connected with the side walls, of the base form the first pole (60) and a second part, which is remote from the side walls, of the base forms the second pole (62),
- wherein the support (50) and the measuring unit (54) are arranged completely between the side walls and
- wherein the surface of the support (50) is oriented perpendicularly to the side walls.

5. Position determining unit (10) according to any one of claims 1 to 4, **characterised in that** the bias magnet (56) of each sensor unit (Sn) is formed to be U-shaped with a first side wall, a second side wall extending parallel to the first and a base connecting the first and second side walls,

   - wherein the first side wall and a first part, which is connected with the first side wall, of the base form the first pole (60) and the second side wall and a second part, which is connected with the second side wall, of the base form the second pole (62),
   - wherein the support (50) and the measuring unit (54) are arranged completely between the first and second side walls and
   - wherein the surface of the support (50) is oriented perpendicularly to the first and second side walls.

6. Position determining unit (10) according to any one of claims 1 to 5, **characterised in that**

   - the on state of the switch output of each sensor unit (Sn) is switched when a first threshold value is exceeded,
   - the off state of the switch output of each sensor unit (Sn) is switched when the first threshold value is fallen below and
   - the length of the transmitter (20) extends from the first end (22) at least to the first sensor unit (S1),
   - wherein a position (Pp) of the first end (22) of the transmitter (20) in the region of the position (Pm) of the mth sensor (Sm) corresponds with a sum current $Isum = (m+1)*Isup$.

7. Position determining unit (10) according to any one of claims 1 to 5, **characterised in that**

   - each sensor unit (Sn) has at least the first threshold value and a second threshold value and
   - the length (24) of the transmitter (20) extends from the first end (22) at least up to the first sensor unit (S1),
   - wherein the second threshold value is lower than the first threshold value,
- wherein the on state of the switch output (36) of each sensor unit (Sn) is switched when the first threshold value is exceeded,
- wherein the off state of the switch output (36) of each sensor unit (Sn) is switched when the second threshold value is fallen below,
- wherein the on state of the switch output (31) of each sensor unit (Sn) is switched to be modulated in pulse width for sensor signals lying between the second threshold value and the first threshold value,
- wherein a duty cycle of the pulse-width modulation is proportional to the sensor signal,
- wherein the current take up Ipwm of a sensor unit (Sn+1) connected with the switch output (36) switched to be modulated in pulse width is proportional to the duty cycle and less than the current take up Isup in the on state, and
- wherein a position (Pp) of the first end (22) of the transmitter (20) in the region of the position (Pm) of the mth sensor unit (Sm) corresponds with a sum current $Isum = m*Isup + Ipwm$.

8. Position determining unit (10) according to any one of claims 1 to 5, **characterised in that**

   - the off state of the switch output (36) of each sensor unit (Sn) is switched when a first threshold value is exceeded,
   - the on state of the switch output (36) of each sensor unit (Sn) is switched when the first threshold value is fallen below and
   - the transmitter (20) extends from the first end (22) at least along a sub-region of the path (30) in the direction of the last sensor unit (Sn),
   - wherein a position (Pp) of the first end (22) of the transmitter (20) in the region of the position (Pm) of the mth sensor unit (Sm) corresponds with a sum current $Isum = m*Isup$.

9. Position determining unit (10) according to any one of claims 1 to 5, **characterised in that** in order to increase the accuracy of the positional determination

   - each sensor unit (Sn) has at least one first threshold value and second threshold value and
   - the transmitter (20) extends from the first end (22) at least along a sub-region of the path in the direction of the last sensor unit (Sn),
   - wherein the second threshold value is lower than the first threshold value,
   - wherein the off state of the switch output (36) of each sensor unit (Sn) is switched when the first threshold value is exceeded,
   - wherein the on state of the switch output (36) of each sensor unit (Sn) is switched when the second threshold value is fallen below,

- wherein the off state of the switch output (38) of each sensor unit (Sn) is switched to be modulated in pulse width for sensor signals lying between the first threshold value and the second threshold value,
- wherein the duty cycle of the pulse-width modulation is inversely proportional to the sensor signal,
- wherein the current take up Ipwm of a sensor unit (Sn+1) connected with the switch output (36) switched to be modulated in pulse width is proportional to the duty cycle and less than the current take up Isup in the on state, and
- wherein a position (Pp) of the first end (22) of the transmitter (20) in the region of the position (Pm) of the mth sensor unit (Sm) corresponds with a sum current Isum = (m-1)*Isup + Ipwm.

10. Position determining unit (10) according to any one of the preceding claims, **characterised in that** the current take up Isup of the sensor units (Sn) amongst one another has a variance of at most 10%.

11. Position determining unit (10) according to any one of the preceding claims, **characterised in that** the current take up of each sensor unit (Sn) is stabilised or trimmed.

12. Position determining unit (10) according to any one of the preceding claims, **characterised in that** the spacings between sensor units (Sn) are the same.

13. Position determining unit (10) according to any one of the preceding claims, **characterised in that** the first end (22) of the transmitter (20) is formed as a tip or as an edge.

14. Position determining unit (10) according to any one of the preceding claims, **characterised in that** the spacing of the transmitter (20) from the path (30) is constant along the entire length (24) of the transmitter (20) or increases at least in the region of the first end (22).

15. Position determining unit (10) according to any one of the preceding claims, **characterised in that** the sensors (Sn) are Hall sensors, wherein the magnetic field sensor (54.1, 54.2) is a laterally or vertically measuring Hall plate or a vertically measuring Hall plate.

16. Position determining unit (10) according to any one of the preceding claims, **characterised in that** the switch output (30) comprises an open-drain transistor.

17. Position determining unit (10) according to claim 16, **characterised in that** a current load capability of an open-drain output of the open-drain transistor is at least 100 mA.

18. Position determining unit (10) according to claim 6 or 7, **characterised in that** an input resistance of the open-drain transistor is at most 100 mΩ.

19. Position determining unit (10) according to any one of the preceding claims, **characterised in that** the last sensor unit (SN) is replaced by a resistance.

**Revendications**

1. Unité de détermination de position (10),

- présentant un nombre de N unités de capteurs identiques (Sn = 1, .., N) disposées à des distances prédéterminées en des positions (Pn) le long d'un tronçon (30) et un émetteur (20),
- dans laquelle l'émetteur (20) est mobile le long du tronçon (30) et présente une première extrémité (22) et une longueur (24) s'étendant depuis la première extrémité (22) parallèlement au tronçon (30) et comprend un matériau ferromagnétique,
- dans laquelle chaque unité de capteur (Sn) présente un support (50), un premier raccord de tension d'alimentation (32), un deuxième raccord de tension d'alimentation (34), une unité de mesure (54) avec une sortie de commutation (36) et un aimant de polarisation (56),
- dans laquelle l'unité de mesure (54) présente au moins un capteur de champ magnétique (54.1, 54.2) pour produire un signal de capteur dépendant du signal de mesure du capteur de champ magnétique et l'unité de mesure (54) est disposée avec un côté inférieur sur un côté supérieur du support (50),
- dans laquelle l'aimant de polarisation (56) présente un premier pôle et un deuxième pôle,
- dans laquelle la sortie de commutation (36) est commutée dans un état ON ou dans un état OFF en fonction d'un franchissement de seuil vers le haut ou d'un franchissement de seuil vers le bas du signal de capteur,
- dans laquelle le premier raccord de tension d'alimentation (32) de chaque unité de capteur (Sn) est raccordé à une tension d'alimentation (Vsup),
- dans laquelle une première unité de capteur (S1) est disposée à un début du tronçon (30),
- dans laquelle une dernière unité de capteur (SN) est disposée à une fin du tronçon (30),
**caractérisée en ce que**
- le deuxième raccord de tension d'alimentation (34) de la première unité de capteur (S1) est raccordé à un potentiel de référence (GND) et la première unité de capteur (S1) présente une consommation de courant Isup,

- le deuxième raccord de tension d'alimentation (34) de chaque autre unité de capteur (Sn>1) est raccordé à la sortie de commutation (36) de l'unité de capteur précédente (Sn-1), et l'autre unité de capteur respective (Sn) peut être connectée ou déconnectée au moyen de la sortie de commutation (36) de l'unité de capteur précédente (Sn-1) et l'autre unité de capteur respective (Sn) dans l'état connecté présente une consommation de courant Isup,

- il est prévu une unité de mesure du courant (40) et l'unité de mesure du courant est disposée avant le premier raccord de tension d'alimentation (32) de la première unité de capteur (S1) ou avant le deuxième raccord de tension d'alimentation (34) de la première unité de capteur (S1),

- dans laquelle les consommations de courant Isup de toutes les unités de capteurs connectées (Sn) contribuent à un courant total Isum mesuré au moyen de l'unité de mesure du courant (40), dans laquelle le courant total Isum vaut un multiple des consommations de courant Isup et est proportionnel à une position (Pp) de la première extrémité (22) de l'émetteur (20).

2. Unité de détermination de position (10) selon la revendication 1, **caractérisée en ce que** l'aimant de polarisation (56) de chaque unité de capteur (Sn) est disposé sur la surface du support (50) avant ou après l'unité de mesure (54) dans une première direction orientée du début du tronçon (30) vers la fin du tronçon (30), dans laquelle le premier pôle (60) et le deuxième pôle (62) sont disposés le long de la première direction ou perpendiculairement à la première direction.

3. Unité de détermination de position (10) selon la revendication 1, **caractérisée en ce que** l'aimant de polarisation (56) est disposé sur la surface du support (50) avant ou après l'unité de mesure (54) dans une deuxième direction tracée perpendiculairement à une première direction orientée du début du tronçon (30) vers la fin du tronçon (30), dans laquelle le premier pôle (60) et le deuxième pôle (62) sont disposés le long de la ligne ou perpendiculairement à la deuxième direction.

4. Unité de détermination de position (10) selon l'une quelconque des revendications 1 à 3, **caractérisée en ce que** l'aimant de polarisation (56) de chaque unité de capteur (Sn) est réalisé en forme de U avec deux parois latérales s'étendant parallèlement l'une à l'autre et un fond reliant les deux parois latérales,

- dans laquelle les deux parois latérales et une partie du fond se raccordant aux parois latérales forment le premier pôle (60) et une partie du fond éloignée des parois latérales forme le deuxième pôle (62),

- dans laquelle le support (50) et l'unité de mesure (54) sont disposés entièrement entre les parois latérales, et

- dans laquelle la surface du support (50) est orientée perpendiculairement aux parois latérales.

5. Unité de détermination de position (10) selon l'une quelconque des revendications 1 à 4, **caractérisée en ce que** l'aimant de polarisation (56) de chaque unité de capteur (Sn) est réalisé en forme de U avec une première paroi latérale, une deuxième paroi latérale s'étendant parallèlement à la première paroi latérale et un fond reliant la première et la deuxième parois latérales,

- dans laquelle la première paroi latérale et une première partie du fond se raccordant à la première paroi latérale forment le premier pôle (60) et la deuxième paroi latérale et une deuxième partie du fond se raccordant à la deuxième paroi latérale forment le deuxième pôle (62),

- dans laquelle le support (50) et l'unité de mesure (54) sont disposés entièrement entre la première et la deuxième parois latérales,

- dans laquelle la surface du support (50) est orientée perpendiculairement à la première et à la deuxième parois latérales.

6. Unité de détermination de position (10) selon l'une quelconque des revendications 1 à 5, **caractérisée en ce que**

- l'état ON de la sortie de commutation (36) de chaque unité de capteur (Sn) est enclenché en cas de franchissement vers le haut d'une première valeur de seuil,

- l'état OFF de la sortie de commutation (36) de chaque unité de capteur (Sn) est enclenché en cas de franchissement vers le bas de la première valeur de seuil, et

- la longueur (24) de l'émetteur (20) s'étend depuis la première extrémité (22) au moins jusqu'à la première unité de capteur (S1),

- dans laquelle une position (Pp) de la première extrémité (22) de l'émetteur (20) dans la région de la position (Pm) de la m-ième unité de capteur (Sm) correspond à un courant total Isum = (m+1)*Isup.

7. Unité de détermination de position (10) selon l'une quelconque des revendications 1 à 5, **caractérisée en ce que**

- chaque unité de capteur (Sn) présente au moins une première valeur de seuil et une deuxième valeur de seuil, et
- la longueur (24) de l'émetteur (20) s'étend depuis la première extrémité (22) au moins jusqu'à la première unité de capteur (S 1),
- dans laquelle la deuxième valeur de seuil est inférieure à la première valeur de seuil,
- dans laquelle l'état ON de la sortie de commutation (36) de chaque unité de capteur (Sn) est enclenché en cas de franchissement vers le haut de la première valeur de seuil,
- dans laquelle l'état OFF de la sortie de commutation (36) de chaque unité de capteur (Sn) est enclenché en cas de franchissement vers le bas de la deuxième valeur de seuil,
- dans laquelle l'état ON de la sortie de commutation (36) de chaque unité de capteur (Sn) est enclenché avec modulation de largeur d'impulsion pour des signaux de capteur situés entre la deuxième valeur de seuil et la première valeur de seuil,
- dans laquelle un coefficient d'utilisation de la modulation de largeur d'impulsion est proportionnel au signal de capteur,
- dans laquelle la consommation de courant Ipwm d'une unité de capteur (Sn+1) raccordée à la sortie de commutation (36) enclenchée avec modulation de largeur d'impulsion est proportionnelle au coefficient d'utilisation et inférieure à la consommation de courant Isup dans l'état ON,
- dans laquelle une position (Pp) de la première extrémité (22) de l'émetteur (20) dans la région de la position (Pm) de la m-ième unité de capteur (Sm) correspond à un courant total Isum = m*Isup + Ipwm.

8. Unité de détermination de position (10) selon l'une quelconque des revendications 1 à 5, **caractérisée en ce que**

- l'état OFF de la sortie de commutation (36) de chaque unité de capteur (Sn) est enclenché en cas de franchissement vers le haut d'une première valeur de seuil,
- l'état ON de la sortie de commutation (36) de chaque unité de capteur (Sn) est enclenché en cas de franchissement vers le bas de la première valeur de seuil, et
- l'émetteur (20) s'étend depuis la première extrémité (22) au moins le long d'une région partielle du tronçon (30) en direction de la dernière unité de capteur (SN),
- dans laquelle une position (Pp) de la première extrémité (22) de l'émetteur (20) dans la région de la position (Pm) de la mième unité de capteur (Sm) correspond à un courant total Isum = m*Isup.

9. Unité de détermination de position (10) selon l'une quelconque des revendications 1 à 5, **caractérisée en ce que** pour augmenter la précision de la détermination de position

- chaque unité de capteur (Sn) présente au moins une première valeur de seuil et une deuxième valeur de seuil, et
- l'émetteur (20) s'étend depuis la première extrémité (22) au moins le long d'une région partielle du tronçon (30) en direction de la dernière unité de capteur (SN),
- dans laquelle la deuxième valeur de seuil est inférieure à la première valeur de seuil,
- dans laquelle l'état OFF de la sortie de commutation (36) de chaque unité de capteur (Sn) est enclenché en cas de franchissement vers le haut de la première valeur de seuil,
- dans laquelle l'état ON de la sortie de commutation (36) de chaque unité de capteur (Sn) est enclenché en cas de franchissement vers le bas de la deuxième valeur de seuil,
- dans laquelle l'état OFF de la sortie de commutation (36) de chaque unité de capteur (Sn) est enclenché avec modulation de largeur d'impulsion pour des signaux de capteur situés entre la première valeur de seuil et la deuxième valeur de seuil,
- dans laquelle le coefficient d'utilisation de la modulation de largeur d'impulsion est inversement proportionnel au signal de capteur,
- dans laquelle la consommation de courant Ipwm d'une unité de capteur (Sn+1) raccordée à la sortie de commutation (36) enclenchée avec modulation de largeur d'impulsion est proportionnelle au coefficient d'utilisation et inférieure à la consommation de courant Isup dans l'état ON,
- dans laquelle une position (Pp) de la première extrémité (22) de l'émetteur (20) dans la région de la position (Pm) de la m-ième unité de capteur (Sm) correspond à un courant total Isum = (m-1)*Isup + Ipwm.

10. Unité de détermination de position (10) selon l'une quelconque des revendications précédentes, **caractérisée en ce que** la consommation de courant Isup des unités de capteurs (Sn) présente entre elles une variance de 10 % au maximum.

11. Unité de détermination de position (10) selon l'une quelconque des revendications précédentes, **caractérisée en ce que** la consommation de courant Isup de chaque unité de capteur (Sn) est stabilisée ou lissée.

12. Unité de détermination de position (10) selon l'une quelconque des revendications précédentes, **carac-**

**térisée en ce que** les distances entre des unités de capteurs (Sn) sont égales.

13. Unité de détermination de position (10) selon l'une quelconque des revendications précédentes, **caractérisée en ce que** la première extrémité (22) de l'émetteur (20) est réalisée en forme de pointe ou d'arête.

14. Unité de détermination de position (10) selon l'une quelconque des revendications précédentes, **caractérisée en ce qu'**une distance de l'émetteur (20) du tronçon (30) est constante le long de toute la longueur (24) de l'émetteur (20) ou augmente au moins dans la région de la première extrémité (22).

15. Unité de détermination de position (10) selon l'une quelconque des revendications précédentes, **caractérisée en ce que** les unités de capteurs (Sn) sont des capteurs de Hall, dans laquelle le capteur de champ magnétique (54.1, 54.2) est une plaque de Hall à mesure latérale ou une plaque de Hall à mesure verticale.

16. Unité de détermination de position (10) selon l'une quelconque des revendications précédentes, **caractérisée en ce que** la sortie de commutation (36) présente un transistor à drain ouvert.

17. Unité de détermination de position (10) selon la revendication 16, **caractérisée en ce qu'**une capacité de transport de courant d'une sortie à drain ouvert du transistor à drain ouvert vaut au moins 100 mA.

18. Unité de détermination de position (10) selon la revendication 16 ou 17, **caractérisée en ce qu'**une résistance d'entrée du transistor à drain ouvert vaut au maximum 100 m$\Omega$.

19. Unité de détermination de position (10) selon l'une quelconque des revendications précédentes, **caractérisée en ce que** la dernière unité de capteur (SN) est remplacée par une résistance.

Fig. 1

Fig. 2    Fig. 3    Fig. 4    Fig. 5

Fig. 6

Fig. 7

Fig. 8

Fig. 9

## IN DER BESCHREIBUNG AUFGEFÜHRTE DOKUMENTE

**In der Beschreibung aufgeführte Patentdokumente**

- WO 2015192965 A1
- DE 112009004394 B4